# EUROPEAN PATENT APPLICATION

(11) **EP 3 916 357 A1**
(43) Date of publication of application: **01.12.2021**
(21) Application number: 20176821.5
(22) Date of filing: 27.05.2020
(51) Int. Cl.: G01C 21/36

(54) **NAVIGATION SYSTEM AND METHOD**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: LINDBERG NILSSON, Erik, 417 47 GÖTEBORG (SE); JOHANSSON, Jonathan, 417 14 GÖTEBORG (SE)
(74) Representative: Zacco Sweden AB

(57) **Abstract**

The disclosure relates to a navigation system (2) and a method for activation or cancellation of presentation of navigation directions by a navigation system (2) for a vehicle user operating a vehicle (1), the method comprises the steps:
- comparing a navigation route (5) with a plurality of stored road stretches, wherein the stored road stretches (5a, 5c) are classified as known to the vehicle user,
- activating presentation of navigation directions associated to the navigation route (5) when travelling on a road stretch (5b) not included in the stored road stretches (5a, 5c), or
- cancelling presentation of navigation directions associated to the navigation route (5) when travelling on a road stretch (5a, 5c) included in the stored road stretches (5a, 5c).

## Description

### TECHNICAL FIELD

The disclosure relates to a navigation system and a method for activation or cancellation of presentation of navigation directions for a vehicle user operating a vehicle.

### BACKGROUND ART

Navigation systems are a common aid used in vehicles when driving. Most of the times when a vehicle user uses the navigation system, a navigation route is entered between a known location and an unknown location, or the other way around. In some cases, both the start and end location is known, but not some part of the way in between.

One example scenario could be when driving home from an event in the city. Finding your way from the parking lot at party location to the main road may not be known, but as soon as you are on the main road, most people will likely find their way home.

US 2004/204827 A1 discloses arbitrarily input start and stop areas where map-matching processing is to be started or stopped. When a vehicle enters the stop area, the map matching processing is stopped, and when the vehicle exits from the stop area, the map matching processing is performed. This requires manual input for start and stop areas.

### SUMMARY

An objective of the disclosure is to provide a method for activation or cancellation of presentation of navigation directions for a vehicle user operating a vehicle. The objective is achieved by the method of claim 1, the computer program of claim 8 and the navigation system of claim 9. Dependent claims provide advantageous embodiments.

The disclosure relates to a method for activation or cancellation of presentation of navigation directions for a vehicle user operating a vehicle, the method comprising the steps:
- comparing a navigation route with a plurality of stored road stretches, wherein the stored road stretches are classified as known to the vehicle user,
- activating presentation of navigation directions associated to the navigation route when travelling on a road stretch not included in the stored road stretches, or
- cancelling presentation of navigation directions associated to the navigation route when travelling on a road stretch included in the stored road stretches.

One advantage with the method is that it allows vehicle users to get presentation of navigation directions when they need it, but will prevent them from being distracted by presentation of navigation directions when they are not needed. Navigation systems often uses verbal presentation of directions as well as graphical presentation. Both of these can be distracting for the vehicle user if they are applied on road stretches with which the vehicle user is familiar.

As cancellation of presentation of navigation directions today requires that the vehicle user manually turn the navigation off, attention is directed to the navigation screen/user interface rather than to driving. It therefore presents a risk when the vehicle user cancels the presentation of navigation directions during driving, as the vehicle user's attention is not on the current traffic situation but on the navigation. This can include having to manipulate either the navigation system in the vehicle's infotainment system or an application on a mobile phone. The latter is illegal in some countries. The method according to the disclosure will remove or at least greatly reduce this risk.

Further, having directions spoken out and/or having visual directional cues shown all the way while knowing where you are heading may be distracting, so cancelling them when they are not needed increases the vehicle user's awareness and thereby safer driving.

The method may further comprise:
- determining the vehicle user and retrieving the stored road stretches associated with that vehicle user.

Today's vehicles are adapted for recognizing a vehicle user for instance by that the vehicle user uses a key fob or a mobile phone that is connected to a certain person and can thereby be used to determine a particular vehicle user when they unlock or enter the vehicle. Another alternative for recognizing the vehicle user can be that the vehicle user has a key tag that connects the vehicle user to one or more vehicles. The key tags may use e.g. Radio-Frequency Identification (RFID) or Near-Field Communication (NFC). Further alternatives for determining the vehicle user is biometric identification such as facial recognition, retinal scan and/or fingerprint identification before or upon entering the vehicle or via a rental car booking system where a specific vehicle is connected to the specific vehicle user that rents the vehicle.

Depending on which vehicle user that uses the vehicle, the stored road stretches that are known to that particular vehicle user will be retrieved and used. This will ensure that the vehicle user will get the best experience from the method.

The method may further comprise:
- registering a road stretch the vehicle user travels on when the navigation system is active,
- classifying a road stretch as known to the vehicle user after a vehicle user input when it has been registered at least one time.

In order for the navigation system to know which road stretches are known to a particular vehicle, the navigation system can be arranged to register one or more road stretches when the vehicle user has activated the navigation system. The activation of the navigation system is an indication that the vehicle user does not know the way over at least one road stretch. The navigation system can classify a road stretch as known once the vehicle has travelled it at least once. Alternatively, the navigation system can be set to classify the road stretch as known once it has been travelled for a defined number of times greater than one if the vehicle user feels that this is required before a road stretch can be considered known. The navigation system can be arranged to request the vehicle userto confirm that a road stretch is to be classified as known before the road stretch is stored. The registering and classification can also be made in the navigation system by that the vehicle user manually enters road stretches that are to be classified as known.

The method may further comprise:
- classifying a road stretch included in the stored road stretches as a road stretch not included in the stored road stretches upon the vehicle user not following the road stretch included in the stored road stretches and/or upon a vehicle user input to classify the road stretch as not included in the stored road stretches.

The method can allow a road stretch to be removed from the stored road stretched classified as known to the vehicle user if the vehicle user deviates from the road stretch when travelling on a road stretch classified as known to the vehicle user. The method can interpret this as the vehicle user not being familiar with the road stretch although it has once been identified as such. It can also be taken as an indication that the vehicle user has found a more efficient road stretch that can be used in the future.

The removal can take place automatically or upon input from the vehicle user in the navigation system that the road stretch should be removed from the known road stretches. The method can also allow for that the deviation should be of a certain distance or a certain amount of time before deletion is triggered. For instance, a deviation to refuel or stop for food should not cause the road stretch to be removed if the vehicle resumes travel on the road stretch after the stop.

The method may further comprise:
- classifying a road stretch included in the stored road stretches as road stretch not included in the stored road stretches if the navigation system determines that at least part of the road stretch included in the stored road stretches has changed, e.g. due to roadworks, redesign or an accident.

Navigation systems today may receive information from third parties regarding ongoing roadworks, road redesigns or accidents causing a part of a known road stretch to change, permanently or temporarily. In this case, the method will classify the road stretch as not known and will thereby present navigation direction for that road stretch in order to ensure that the vehicle user will be able to navigate past the change in the road stretch. Once information is received by the navigation system that the accident is cleared or that the roadwork, if temporary, is completed, the navigation system will again recognize that road stretch as known to the vehicle user. One advantage is that the vehicle user can get information on road works or accidents along the way when traveling on a completely known road stretch. The method can thus in real time classify a road stretch as not known while the vehicle user drives on the road stretch and thereby start presenting navigation directions as soon as the information reaches the navigation system. Similarly, if the vehicle user has not yet reached the roadworks or accident that caused the road stretch to be classified as not known and the roadworks or accident has been cleared, the method can classify the road stretch as known again. A message informing the vehicle user of the update can be provided to make the vehicle user aware of that navigation directions will start to be presented or will be cancelled.

The method may further comprise:
- determining that the vehicle is travelling on a road stretch included in the stored road stretches by means of one or more of: global navigation satellite system (GNSS), assisted global navigation satellite system, Vehicle-to-everything (V2X) position extraction, blue tooth transmitter position extraction, radio triangulation, radio multilateration, 5G positioning and 6G positioning.

The method is suitable for use with a variety of known vehicle positioning techniques and more than one can be used in order to increase the accuracy of the positioning.

The method may further comprise:
- requesting confirmation from the vehicle user if activation or cancellation of navigation directions should be engaged before starting navigation.

The vehicle user can opt to use the method or not when starting navigation. One example of this is that the navigation system requests the vehicle user to confirm that the method should be used or not during this particular journey.

The disclosure also relates to a computer program configured to cause execution of the method according to the above description.

A computer program configured to execute the method according to the disclosure is adaptable to function for all kinds of navigation software, either in-vehicle only navigation software or navigation software applications for mobile phones. For the mobile phone applications, they can be used in the vehicle as is, or projected on the vehicles infotainment screen through Apple CarPlay® or Android Auto™. If the method is applied in an in-vehicle only navigation software or projected on the vehicles infotainment screen through Apple CarPlay® or Android Auto™, the vehicle user can use the infotainment screen to operate the various functions of the application.

In the application, the vehicle user can easily mark a road stretch as known or unknown by clicking on it. This complements registration of known road stretches by the navigation system. The application can be used to set up the road stretches that are known to a vehicle user before the first use of a vehicle, thereby removing the need for registering already known road stretches a first time in the navigation system while driving.

The application could also allow the vehicle user to mark an entire neighbourhood as known if the vehicle user feels that he is familiar enough with it even though he may not know every single street.

The application enables a vehicle user to plan a route in the application before leaving and already in advance instruct the navigation system which road stretches you do not need navigation instructions for, if these were not already saved as known in the navigation system. These road stretches would then be saved as known in the future. The application also allow a vehicle user's known road stretches to be easily carried between different vehicles to be synched with the on-board navigation or to be used as it is with the vehicle's display by Android Auto or Carplay. The method of the disclosure could be applied in a proprietary stand-alone application or as a function in an existing navigation application.

The disclosure also relates to a navigation system, wherein the navigation system comprises a vehicle user input arrangement, a vehicle route registration unit, a storage arrangement and a vehicle position determination unit, wherein the navigation system is configured for:
- comparing a navigation route with a plurality of stored road stretches, wherein the stored road stretches are classified as known to the vehicle user,
- activating presentation of navigation directions associated to the navigation route when travelling on a road stretch not included in the stored road stretches, or
- cancelling presentation of navigation directions associated to the navigation route when travelling on a road stretch included in the stored road stretches.

The advantages with the navigation system are the same as for the method described above. As mentioned above, the navigation system can for instance be an in-vehicle navigation system or a navigation system application in a mobile phone. This means that the vehicle user input arrangement, the vehicle route registration unit, the storage arrangement and the vehicle position determination unit can be positioned in the vehicle or in a mobile device. It is also possible for the mobile device to provide some or all of the features of the navigation system, especially when projecting a mobile navigation application on the vehicle's infotainment screen.

The navigation system may further be configured for:
- determining the vehicle user and retrieving the stored road stretches associated with that vehicle user.

The vehicle route registration unit may further be configured for:
- registering a road stretch the vehicle user travels on when the navigation system is active,
- classifying a road stretch as known to the vehicle user after a vehicle user input when it has been registered at least one time.

The vehicle route registration unit may further be configured for:
- classifying a road stretch included in the stored road stretches as a road stretch not included in the stored road stretches upon the vehicle user not following the road stretch included in the stored road stretches and/or upon a vehicle user input to classify the road stretch as not included in the stored road stretches, and
- classifying a road stretch included in the stored road stretches as road stretch not included in the stored road stretches if the navigation system determines that at least part of the road stretch included in the stored road stretches has changed, e.g. due to roadworks, redesign or an accident.

The vehicle position determination unit determines the vehicle's position by one or more of:
- global navigation satellite system (GNSS),
- assisted global navigation satellite system,
- vehicle-to-everything (V2X) position extraction,
- blue tooth transmitter position extraction,
- radio triangulation,
- radio multilateration,
- 5G positioning,
- 6G positioning.

The navigation system may further be configured for:
- requesting confirmation from the vehicle user if activation or cancellation of navigation directions should be engaged before starting navigation.

The disclosure also relates to a vehicle comprising a navigation system according to the above description.

### BRIEF DESCRIPTION OF THE DRAWINGS

Fig. 1 schematically shows a vehicle equipped with a navigation system,
Fig. 2a-2c schematically shows different examples of navigation routes with road stretches that are classified as known to the vehicle user and that are not classified as known to the vehicle user,
Fig. 3 schematically shows a flowchart of the method of the disclosure according to one example embodiment.

### DETAILED DESCRIPTION

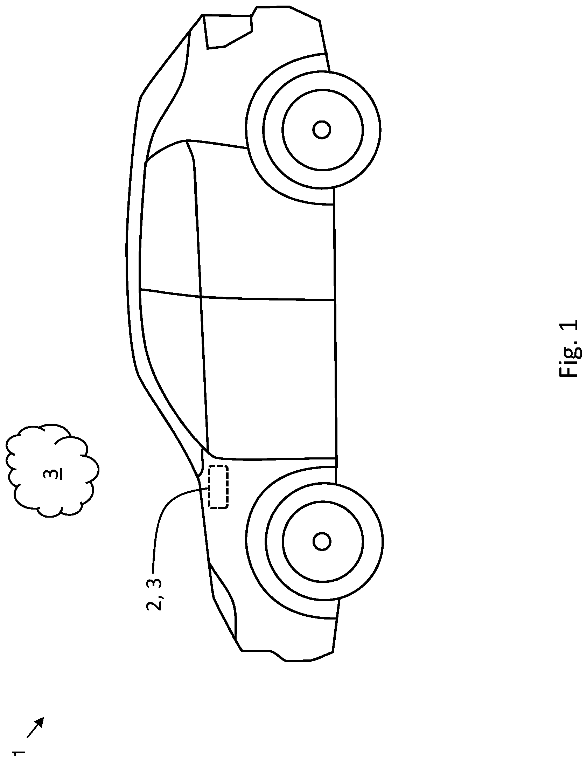

Fig. 1 schematically shows a vehicle 1 equipped with a navigation system 2. In figure 1, the navigation system 2 is schematically illustrated as being an integral part of the vehicle 1.

The navigation system 2 comprises a vehicle user input arrangement, such as a touch screen, a voice recognition unit or a physical keyboard arranged in connection to a vehicle infotainment system. Through the input arrangement the vehicle user can input a desired start destination, end destination, if the navigation route is to have any waypoints and/or if the navigation route has restrictions such as no toll roads, no highways and similar. The navigation system 2 further comprises a vehicle route registration unit arranged to register road stretches on which the vehicle 1 travels. Further, a storage arrangement 3 is arranged in the vehicle 1 and/or in a cloud server and is used to store road stretches classified as known to the vehicle user. A vehicle position determination unit in the navigation system 2 is arranged to determine the vehicle's 1 position for instance by a global navigation satellite system (GNSS), assisted global navigation satellite system, Vehicle-to-everything (V2X) position extraction, Bluetooth® transmitter position extraction, radio triangulation, radio multilateration, 5G positioning and 6G positioning. With positioning extraction is meant that the vehicle 1 is equipped with a receiver arranged to receive V2X or Bluetooth® position signals from V2X or Bluetooth® transmitters positioned along the navigation route.

It is also possible for a vehicle user to use a navigation application in a mobile phone as a navigation system 2 or to use a navigation application built-in in the vehicle's 1 on-board infotainment system. The navigation application in the mobile phone can be projected in the vehicle's 1 on-board infotainment system by Apple CarPlay® or Android Auto™.

In figure 1, a cloud storage is schematically illustrated as one example of a storage arrangement 3. The storage arrangement 3 can also be a local memory arrangement in the vehicle 1, a mobile phone internal memory if a mobile phone is used or a combination of the mentioned examples.

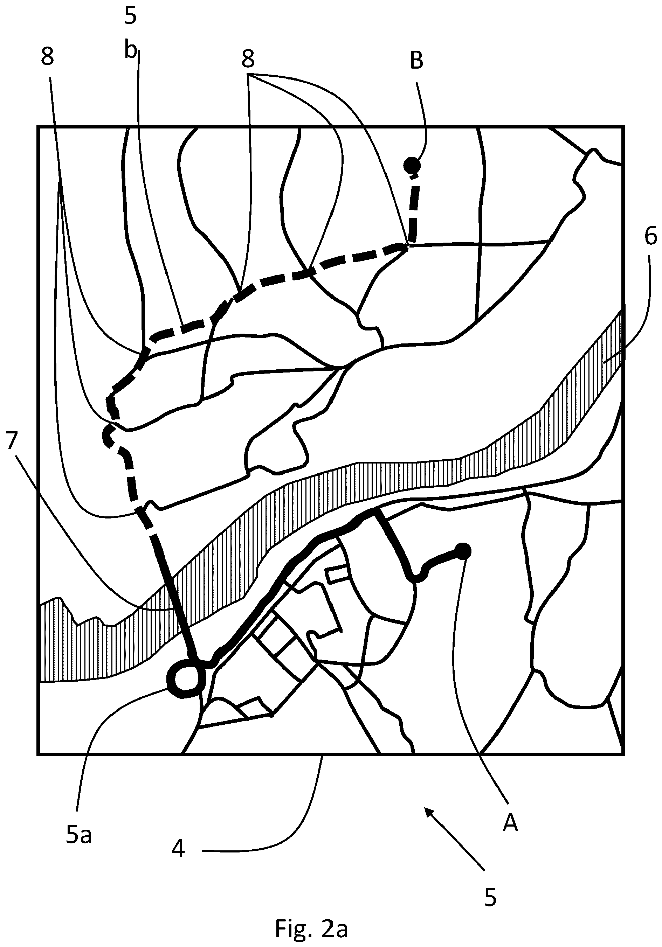

Figures 2a-2c show examples of how the method can be used in various situations.

Fig. 2a schematically shows a city road grid 4 in a navigation system 2. A navigation route 5 with a first road stretch 5a that is classified as known to the vehicle user and a second road stretch 5b that is not classified as known to the vehicle user is overlaid the city road grid 4. For simplification, the road stretches classified as known to the vehicle user has been combined into one first road stretch 5a. Similarly, the road stretches not classified as known to the vehicle user has been combined into one second road stretch 5b. In reality, the first and second road stretches 5a, 5b comprise a number of separate smaller road stretches.

The city comprises a river 6 separating two sides of the city with a bridge 7 connecting the two sides. In the figure, the vehicle user wants the navigation route 5 to begin at start location A and wishes to drive to end location B. The navigation system 2 compares the navigation route 5 with a plurality of stored road stretches classified as known to the vehicle user. In this example, the navigation system 2 recognizes that the vehicle user is familiar with a first road stretch 5a that leads to the bridge 7. During travelling of this road stretch 5a, the navigation system 2 cancels presentation of navigation directions.

Once the vehicle user has passed the bridge 7, the navigation system 2 recognizes that a second road stretch 5b to end location B is not classified as known to the vehicle user and activates presentation of navigation directions. As can be seen from the figure the navigation directions allow the vehicle user to navigate past a number of intersections 8 on the vehicle user's way to end location B.

It is of course possible that the reverse is possible. The vehicle user may be at start location A not knowing the way to the bridge 7, but is familiar with the road stretch from the bridge 7 to end location B. In this case, the navigation system 2 activates presentation of navigation directions during travelling on the first road stretch up until the vehicle user has passed the bridge 7. At this point, when entering the second road stretch, the navigation system 2 cancels presentation of navigation directions.

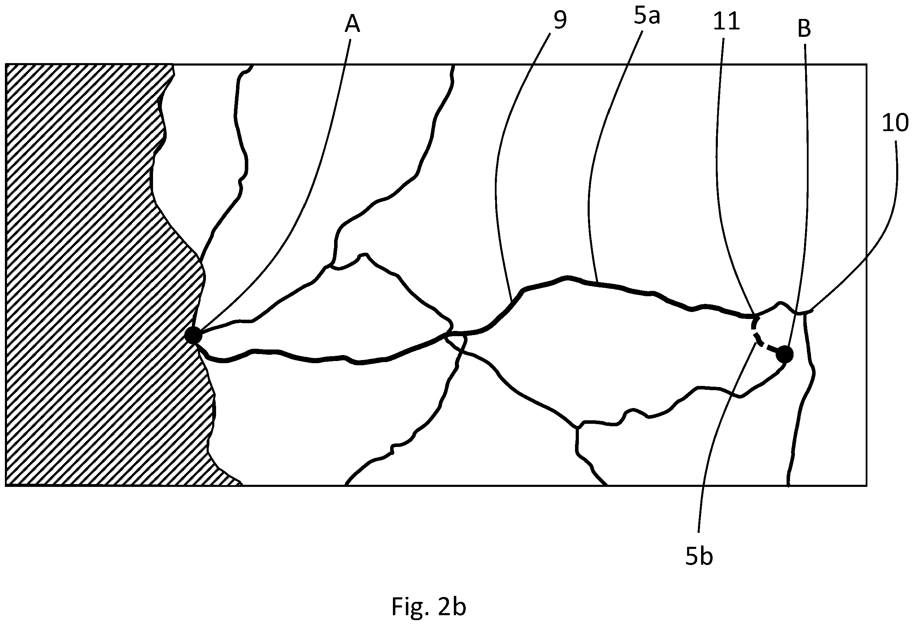

Another example of how the method can be used is shown in figure 2b. In this example, the start location A is in a city known to the vehicle user. The end location B is an unknown location situated after a long distance travelling on a highway 9 towards a city 10. When traveling from the start location A to the end location B situated outside the city 10 a distance away, having the navigation system 2 repeatedly present navigation directions "go straight forward" for 1.5 hours can be annoying. In this example, the navigation system 2 can present the "go straight forward" when entering the highway 9 and thereafter cancel the navigation directions. When the vehicle user approaches the highway exit 11 from the highway 9, the navigation system 2 activates presentation of navigation direction for the distance to the off-ramp and the last road stretch to the end location B.

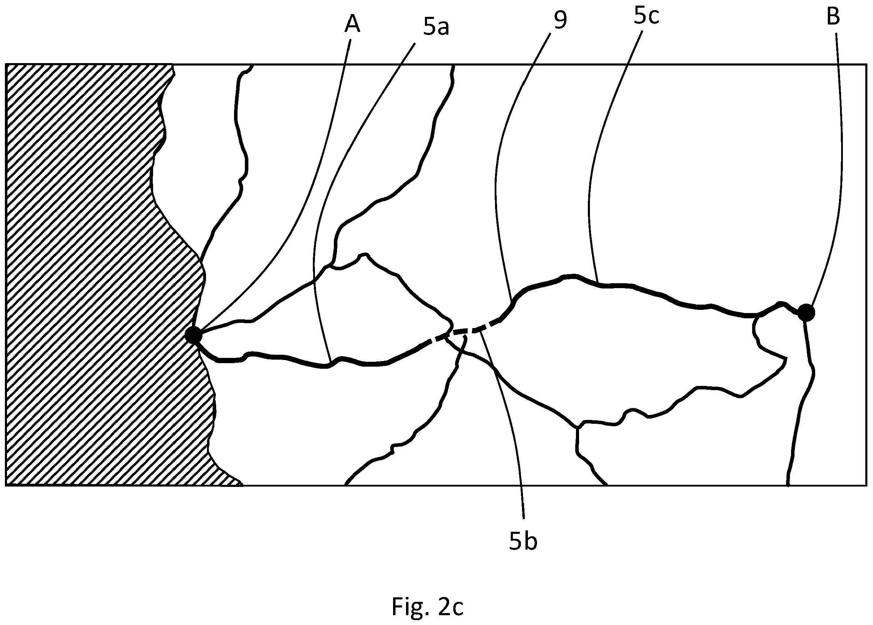

A further example is the situation when the vehicle user needs presentation of navigation direction for a part of the navigation route 5, but both road stretches close to start location A and end location B are known, as shown in figure 2c. The vehicle user wants to drive from a known start location A in a city known to the vehicle user to an end location B in a second city known to the vehicle user. The vehicle user has not driven between these two locations before. As the vehicle user enters the navigation route 5, the navigation system 2 recognizes that a first road stretch 5a is classified as known to the vehicle user. The first road stretch 5a is connected to a second road stretch 5b that is not classified as known to the vehicle user. The second road stretch 5b is in turn connected to a third road stretch 5c that is classified as known to the vehicle user. In this example, the navigation system 2 cancels presentation of navigation directions during the first road stretch 5a, activates presentation of navigation directions during the second road stretch 5b and cancels presentation of navigation directions again during the third road stretch 5c.

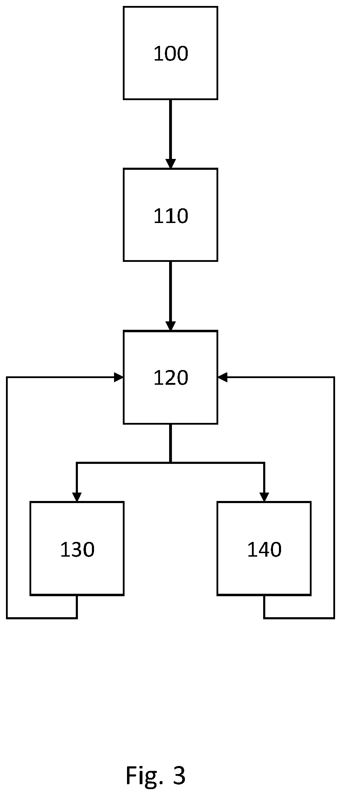

Fig. 3 schematically shows a flowchart of the method of the disclosure according to one example embodiment.

In method step 100, the vehicle user starts navigation and enters navigation route 5 at least comprising a start location A and end location B. The start location A does not necessarily need to be entered manually, but can be taken as the vehicle's 1 current location. As an alternative to entering the end location B manually in the navigation system, the end location B can be predicted by the vehicle user's driving history or from a calendar event in a vehicle user's calendar. The calendar information can be synchronized with or otherwise be made available to the navigation system in a telephone and/or an in-vehicle navigation system.

In method step 110, the navigation system 2 compares the input navigation route 5 with a plurality of stored road stretches, wherein the stored road stretches are classified as known to the vehicle user.

In method step 120, the navigation system 2 determines which road stretch on which the vehicle 1 is travelling.

In method step 130, the navigation system 2 activates presentation of navigation directions associated to the navigation route 5 if it is determined in method step 120 the vehicle 1 is travelling on a road stretch not included in the stored road stretches.

Alternatively, in method step 140, the navigation system 2 cancels presentation of navigation directions associated to the navigation route 5 if it is determined that the vehicle 1 is travelling on a road stretch included in the stored road stretches.

The method step 120 is performed continuously so that the method can switch between method steps 130 and 140 when determining if the road stretch the vehicle 1 is travelling on is changes from a road stretch classified as known or as not known.

The method can also include the following steps, although they are not shown in the flowchart.

Determining the vehicle user and retrieving the stored road stretches associated with that vehicle user. This is preferably done before execution of method step 100.

Registering a road stretch the vehicle user travels on when the navigation system 2 is active and classifying a road stretch as known to the vehicle user after a vehicle user input when it has been registered at least one time. This can be done essentially concurrently with the method step 120.

Classifying a road stretch included in the stored road stretches as a road stretch not included in the stored road stretches upon the vehicle user not following the road stretch included in the stored road stretches and/or upon a vehicle user input to classify the road stretch as not included in the stored road stretches. This can be performed if it is discovered during travelling on a known road stretch that the vehicle user deviates from the road stretch classified as known and affects method step 110 as the road stretches classified as known will be changed. This in turn will affect the activation and cancelling of presenting navigation directions in method steps 130 and 140 based on the outcome of method step 120.

Classifying a road stretch included in the stored road stretches as road stretch not included in the stored road stretches if the navigation system 2 determines that at least part of the road stretch included in the stored road stretches has changed, e.g. due to roadworks, redesign or an accident. This affects method steps 110-140 as described in the paragraph above.

Requesting confirmation from the vehicle user if activation or cancellation of navigation directions should be engaged before starting navigation. This step can be performed before the navigation route 5 is entered in step 100.

Although the disclosure has been illustrated and described in detail in the drawings and foregoing description, such illustration and description are to be considered illustrative or exemplary and the disclosure is not limited to the disclosed example embodiments. The method has been described for use with a vehicle, but it can also be adapted for other kinds of vehicles or for navigating on foot.

### References:

- 1.: Vehicle
- 2.: Navigation system
- 3.: Storage arrangement
- 4.: City road grid
- 5.: Navigation route
a. First road stretch
b. Second road stretch
c. Third road stretch
- 6.: River
- 7.: Bridge
- 8.: Intersection
- 9.: Highway
- 10.: City
- 11.: Highway exit

## Claims

1. Method for activation or cancellation of presentation of navigation directions by a navigation system (2) for a vehicle user operating a vehicle (1), the method comprises the steps:
- comparing a navigation route (5) with a plurality of stored road stretches, wherein the stored road stretches (5a, 5c) are classified as known to the vehicle user,
- activating presentation of navigation directions associated to the navigation route (5) when travelling on a road stretch (5b) not included in the stored road stretches (5a, 5c), or
- cancelling presentation of navigation directions associated to the navigation route (5) when travelling on a road stretch (5a, 5c) included in the stored road stretches (5a, 5c).

2. Method according to claim 1, wherein the method comprises:
- determining the vehicle user and retrieving the stored road stretches (5a, 5c) associated with that vehicle user.

3. Method according to claim 2, wherein the method comprises:
- registering a road stretch the vehicle user travels on when the navigation system (2) is active,
- classifying a road stretch as known to the vehicle user after a vehicle user input when it has been registered at least one time.

4. Method according to any one of the preceding claims, wherein the method comprises:
- classifying a road stretch included in the stored road stretches (5a, 5c) as a road stretch (5b) not included in the stored road stretches (5a, 5c) upon the vehicle user not following the road stretch included in the stored road stretches (5a, 5c) and/or upon a vehicle user input to classify the road stretch (5b) as not included in the stored road stretches (5a, 5c).

5. Method according to any one of the preceding claims, wherein the method comprises:
- classifying a road stretch included in the stored road stretches (5a, 5c) as road stretch (5b) not included in the stored road stretches (5a, 5c) if the navigation system (2) determines that at least part of the road stretch included in the stored road stretches (5a, 5c) has changed, e.g. due to roadworks, redesign or an accident.

6. Method according to any one of the preceding claims, wherein the method comprises:
- determining that the vehicle (1) is travelling on a road stretch included in the stored road stretches (5a, 5c) by means of one or more of: global navigation satellite system (GNSS), assisted global navigation satellite system, Vehicle-to-everything (V2X) position extraction, blue tooth transmitter position extraction, radio triangulation, radio multilateration, 5G positioning and 6G positioning.

7. Method according to any one of the preceding claims, wherein the method comprises:
- requesting confirmation from the vehicle user if activation or cancellation of navigation directions should be engaged before starting navigation.

8. A computer program configured to cause execution of the method according to any one of claims 1 through 7.

9. Navigation system (2), wherein the navigation system (2) comprises a vehicle user input arrangement, a vehicle route registration unit, a storage arrangement (3) and a vehicle position determination unit, wherein the navigation system (2) is configured for:
- comparing a navigation route (5) with a plurality of stored road stretches (5a, 5c), wherein the stored road stretches (5a, 5c) are classified as known to the vehicle user,
- activating presentation of navigation directions associated to the navigation route (5) when travelling on a road stretch (5b) not included in the stored road stretches (5a, 5c), or
- cancelling presentation of navigation directions associated to the navigation route (5) when travelling on a road stretch included in the stored road stretches (5a, 5c).

10. Navigation system (2) according to claim 9, wherein the navigation system (2) is further configured for:
- determining the vehicle user and retrieving the stored road stretches (5a, 5c) associated with that vehicle user.

11. Navigation system (2) according to claim 10, wherein the vehicle route registration unit is further configured for:
- registering a road stretch the vehicle user travels on when the navigation system (2) is active,
- classifying a road stretch as known to the vehicle user after a vehicle user input when it has been registered at least one time.

12. Navigation system (2) according to any one of claims 9-11, wherein the vehicle route registration unit is further configured for:
- classifying a road stretch included in the stored road stretches (5a, 5c) as a road stretch (5b) not included in the stored road stretches (5a, 5c) upon the vehicle user not following the road stretch included in the stored road stretches (5a, 5c) and/or upon a vehicle user input to classify the road stretch (5b) as not included in the stored road stretches (5a, 5c), and
- classifying a road stretch included in the stored road stretches (5a, 5c) as road stretch (5b) not included in the stored road stretches (5a, 5c) if the navigation system (2) determines that at least part of the road stretch included in the stored road stretches (5a, 5c) has changed, e.g. due to roadworks, redesign or an accident.

13. Navigation system (2) according any one of claims 9-12, wherein the vehicle position determination unit determines the vehicle's (1) position by one or more of:
- global navigation satellite system (GNSS),
- assisted global navigation satellite system,
- vehicle-to-everything (V2X) position extraction,
- blue tooth transmitter position extraction,
- radio triangulation,
- radio multilateration,
- 5G positioning,
- 6G positioning.

14. Navigation system (2) according to any one of the preceding claims 9-13, wherein the navigation system (2) is further configured for:
- requesting confirmation from the vehicle user if activation or cancellation of navigation directions should be engaged before starting navigation.

15. Vehicle (1) comprising a navigation system (2) according to any one of claims 9-14.
